# EUROPEAN PATENT APPLICATION

(11) **EP 4 535 921 A1**
(43) Date of publication of application: **09.04.2025**
(21) Application number: 22944360.1
(22) Date of filing: 02.06.2022
(51) Int. Cl.: H04W 76/40

(54) **METHOD AND APPARATUS FOR DETERMINING INACTIVE MULTICAST SERVICE AREA, AND METHOD AND APPARATUS FOR CONFIGURING INACTIVE MULTICAST SERVICE AREA**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Gunzelmann, Rainer
(86) International application number: PCT/CN2022/097004
(87) International publication number: WO 2023/231032

(57) **Abstract**

The present disclosure belongs to the field of communications. Disclosed are a method and apparatus for determining an inactive multicast service area, and a method and apparatus for configuring an inactive multicast service area. The method for determining an inactive multicast service area comprises: determining a service area of an inactive multicast service (301). The method is used for supporting the continuity of multicast service reception of a terminal during motion.

## Description

### TECHNICAL FIELD

The present invention relates to the field of communication, and more particularly, to a method and an apparatus for determining a multicast service area for an inactive state, and a method and an apparatus for configuring a multicast service area for an inactive state.

### BACKGROUND

In the 3^{rd} Generation Partnership Project (3GPP) Release 17 (Rel-17), a User Equipment (UE) is supported to receive a multicast service in a Radio Resource Control (RRC) connected state (RRC_connected).

The UE must establish an RRC connection first, and then it receives the multicast service after it enters the RRC connected state. This reception mode of the multicast service cannot meet the reception requirement on some key services, such as Multimedia Priority Service (MPS). In addition, the UE needs to be always maintained in the RRC connected state to receive the multicast service, which leads to very high power consumption.

Hence, as studied in the 3GPP Release 18 (Rel-18), the UE is supported to receive the multicast service in an RRC inactive state (RRC_inactive).

### SUMMARY

An object of the present invention is to provide a method and an apparatus for determining a multicast service area for an inactive state, and a method and an apparatus for configuring a multicast service area for an inactive state. The present invention provides the following technical solutions.

In one aspect, the present invention provides in some embodiments a method for determining a multicast service area for an inactive state, executed by a terminal, including: determining a service area of a multicast service for the inactive state.

In another aspect, the present invention provides in some embodiments a method for configuring a multicast service area for an inactive state, executed by a network device, including: sending configuration information associated with a multicast service for the inactive state to a terminal. The configuration information associated with the multicast service for the inactive state is used to help the terminal to determine a service area of the multicast service for the inactive state.

In yet another aspect, the present invention provides in some embodiments an apparatus for determining a multicast service area for an inactive state, including: a processing module configured to determine a service area of a multicast service for the inactive state.

In still yet another aspect, the present invention provides in some embodiments an apparatus for configuring a multicast service area for an inactive state, including: a sending module configured to send configuration information associated with a multicast service for the inactive state to a terminal. The configuration information associated with the multicast service for the inactive state is used to help the terminal to determine a service area of the multicast service for the inactive state.

In still yet another aspect, the present invention provides in some embodiments a terminal, including: a processor; and a transceiver coupled to the processor. The processor is configured to load and execute an executable instruction to implement the above-mentioned method for determining the multicast service area for the inactive state.

In still yet another aspect, the present invention provides in some embodiments a network device, including: a processor; and a transceiver coupled to the processor. The processor is configured to load and execute an executable instruction to implement the above-mentioned method for configuring the multicast service area for the inactive state.

In still yet another aspect, the present invention provides in some embodiments a computer-readable storage medium storing therein at least one instruction, at least one program, a code set or an instruction set. The at least one instruction, the at least one program, the code set or the instruction set is loaded by and executed by a processor to implement the above-mentioned method for determining the multicast service area for the inactive state or the above-mentioned method for configuring the multicast service area for the inactive state.

In still yet another aspect, the present invention provides in some embodiments a computer program product (or a computer program) including a computer instruction. The computer instruction is stored in a computer-readable storage medium, and a processor of a computer equipment reads the computer instruction from the computer-readable storage medium and executes the computer instruction to implement the above-mentioned method for determining the multicast service for the inactive state or implement the above-mentioned method for configuring the multicast service for the inactive state.

In still yet another aspect, the present invention provides in some embodiments a chip including a programmable logic circuit and/or a program instruction. The chip operates to implement the above-mentioned method for determining the multicast service for the inactive state or implement the above-mentioned method for configuring the multicast service for the inactive state.

The technical solutions provided in the embodiments of the present invention include the following beneficial effects.

During the reception of a multicast service, the terminal determines the service area of the multicast service for the inactive state, so as to support the terminal to receive the multicast service in an RRC inactive state, thereby to support the reception continuity of the multicast service during movement of the terminal.

It should be appreciated that, the above-mentioned general description and the following detailed description are for illustrative and explanatory purposes, but shall not be used to limit the present invention.

### BRIEF DESCRIPTION OF THE DRAWINGS

In order to illustrate the technical solutions of the present invention in a clearer manner, the drawings desired for the embodiments of the present invention will be described hereinafter briefly. Obviously, the following drawings merely relate to some embodiments of the present invention, and based on these drawings, a person skilled in the art may obtain the other drawings without any creative effort.
FIG. 1 is a schematic view showing a state switch of a multicast session according to an embodiment of the present invention;
FIG. 2 is a schematic view showing a communication system according to an embodiment of the present invention;
FIG. 3 is a flow chart of a method for determining a multicast service area for an inactive state according to an embodiment of the present invention;
FIG. 4 is another flow chart of the method for determining the multicast service area for the inactive state according to an embodiment of the present invention;
FIG. 5 is yet another flow chart of the method for determining the multicast service area for the inactive state according to an embodiment of the present invention;
FIG. 6 is still yet another flow chart of the method for determining the multicast service area for the inactive state according to an embodiment of the present invention;
FIG. 7 is still yet another flow chart of the method for determining the multicast service area for the inactive state according to an embodiment of the present invention;
FIG. 8 is still yet another flow chart of the method for determining the multicast service area for the inactive state according to an embodiment of the present invention;
FIG. 9 is still yet another flow chart of the method for determining the multicast service area for the inactive state according to an embodiment of the present invention;
FIG. 10 is still yet another flow chart of the method for determining the multicast service area for the inactive state according to an embodiment of the present invention;
FIG. 11 is a flow chart of a method for configuring a multicast service area for an inactive state according to an embodiment of the present invention;
FIG. 12 is another flow chart of the method for configuring the multicast service area for the inactive state according to an embodiment of the present invention;
FIG. 13 is yet another flow chart of the method for configuring the multicast service area for the inactive state according to an embodiment of the present invention;
FIG. 14 is still yet another flow chart of the method for configuring the multicast service area for the inactive state according to an embodiment of the present invention;
FIG. 15 is a block diagram of an apparatus for determining a multicast service area for an inactive state according to an embodiment of the present invention;
FIG. 16 is a block diagram of an apparatus for configuring a multicast service area for an inactive state according to an embodiment of the present invention;
FIG. 17 is a schematic view showing a terminal according to an embodiment of the present invention; and
FIG. 18 is a schematic view showing a network device according to an embodiment of the present invention.

### DETAILED DESCRIPTION

The present invention will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present invention, and in contrast, they are merely examples of devices and methods consistent with some aspects of the embodiments of the present invention as specified in the appended claims.

In a 5^{th}-Generation (5G) New Radio (NR) system, a Multicast Broadcast Service (MBS) identity includes at least one of: a Temporary Mobile Group Identity (TMGI); or a MBS Session Identity (ID); a MBS Quality of Service (QoS) flow ID.

There are the following two transmission modes for a MBS.

Mode 1 (transmission in a multicast manner): a terminal enters an RRC connected state, receives reception configuration information about the MNS, and receives the MBS based on the reception configuration information. The reception configuration information about the MBS is sent by a network device to the terminal via a dedicated signaling.

Mode 2 (transmission in a broadcast manner): the terminal receives the reception configuration information about the MBS in the RRC connected state, the RRC inactive state or an RRC idle state (i.e., RRC_idle), and receives the MBS based on the reception configuration information. The reception configuration information is sent by the network device to the terminal via system information or MBS control channel information. For example, the system information includes a System Information Block (SIB), and a MBS control channel includes a Main Control Channel (MCCH).

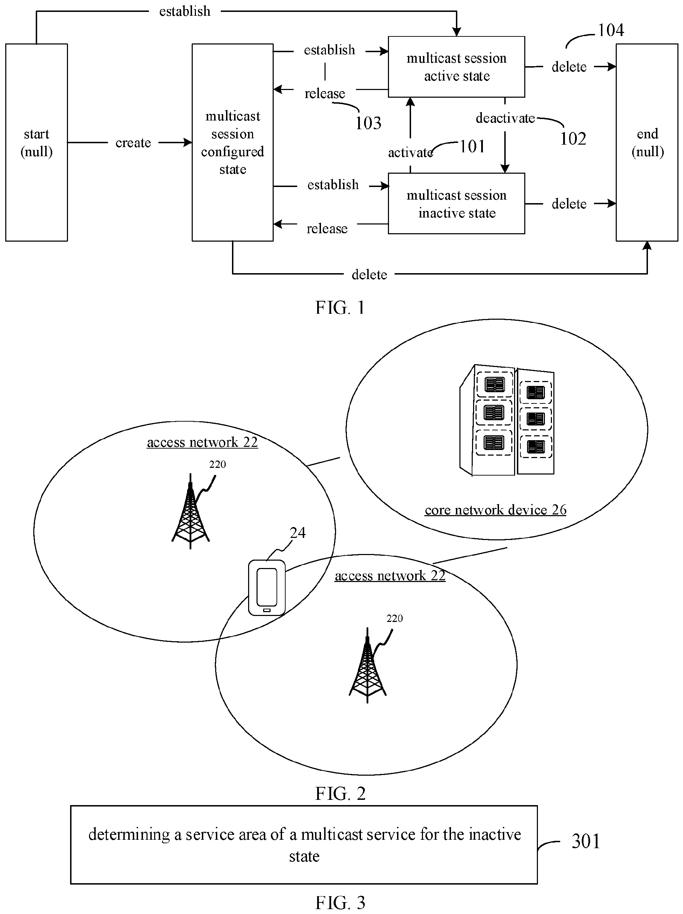

FIG. 1 shows multicast session states and a state switching procedure. The multicast session states include the following three states.

**Configured state:** for a multicast session, in 5G Core Network Functions (SGC NFs), information about the multicast session, e.g., QoS information, is provided, and resources at a core network side, e.g., resources for a Multicast Broadcast-Session Management Function (MB-SMF), a Network Exposure Function (NEF) and a Multicast Broadcast- User Plane Function (MB-UPF), are reserved, but no user plane resource is reserved for a Next Generation-Radio Access Network (NG-RAN), so it is impossible to transmit MBS data. A TMGI may be assigned for the multicast session. After authentication and configuration, terminals are allowed to join the multicast session, and an establishment of the multicast session between the NG-RAN and the terminal is triggered by a join request from a first accepted terminal.

**Active state:** a multicast session is established, and MBS data is transmitted to a terminal which has joined the multicast session. A radio resource for the multicast session is established. In order to receive the multicast MBS data, the terminal joining the multicast session should be in a Connection Management-CONNECTED state (CM-CONNECTED). The terminal is allowed to join the multicast session (after authentication). 5GC resources and radio resources for the multicast session are reserved for the terminal joining the multicast session.

**Inactive state:** a multicast session is established, but there is no MBS data on a terminal joining the multicast session. A radio resource for the multicast session is released, and the terminal joining the multicast session may be in the CM-CONNECTED state or a Connection Management-IDLE state (CM-IDLE). The terminal is allowed to join the multicast session after authentication.

### 101: Multicast Session Activation

This is triggered by a 5GC, a radio resource for a multicast session is established, and multicast session data (including MBS data) starts to be transmitted to the terminals. The terminal in the terminals joining the multicast session which is in the CM-IDLE state or in the CM-CONNECTED state in the RRC inactive state is notified. The activation is triggered via a request from an Application Function (AF) or triggered via data notification from the MB-UPF. A multicast session state is switched from the inactive state to the active state.

Particularly, whether the multicast session is in a creation state or an establishment state is not perceived by the AF and the NEC. Hence, the AF may update a session state, and before the session establishment, the session is requested to be activated, and in a case that a first UE joins the session subsequently, the session is established in the activate state, but the switching of the active state of the multicast session may not be triggered.

### 102: Multicast Session Deactivation

After it has been triggered by the 5GC, the radio resource for the multicast session is released, and the multicast session data is stopped from being transmitted to the terminal. The deactivation may be triggered by the request from the AF, or triggered in response to the MB-UPF not receiving the multicast data. The multicast session state is switched from the inactive state to the inactive state.

### 103: Multicast Session Release

This is triggered in response to a last terminal leaving the multicast session or triggered by a multicast session deletion procedure. Resources for the multicast session are all released on a 5GC node and a Radio Access Network (RAN) node. The multicast session state is switched from the active state or the inactive state to the configured state.

### 104: Multicast Session Deletion

All information about the multicast session is deleted from the 5GC, and the TMGI of the multicast session (if it is assigned during the configuration of the multicast session) is released. The deletion may be triggered by the request from the AF. The multicast session state is switched from the configured state, the active state or the inactive state to "end (NULL)".

5G is an abbreviation of 5^{th} Generation Mobile Communication Technology, and NR is an abbreviation of New Radio.

In the 3GPP Rel-17, a terminal is supported to receive a multicast service in an RRC connected state. The terminal must establish an RRC connection at first, and then it receives the multicast service after it enters the RRC connected state. This reception mode of the multicast service cannot meet the reception requirement on some key services, e.g., MPS. In addition, the terminal needs to be always maintained in the RRC connected state to receive the multicast service, which leads to very high power consumption.

Hence, as studied in the 3GPP Rel-18, the terminal is supported to receive the multicast service in an RRC inactive state (RRC_inactive). In order to support the reception continuity of the multicast service during the movement of the terminal, the present invention provides a method for determining a multicast service area for an inactive state and a method for configuring a multicast service area for an inactive state, and details thereof may refer to the following embodiments.

FIG. 2 is a block diagram of a communication system according to an exemplary embodiment of the present invention. The communication system includes an access network 22, a UE 24 and a core network device 26.

The access network 22 includes several access network devices 220. The access network device 220 may be a base station, and the base station is an apparatus deployed in the access network to provide a wireless communication function for the UE (also called as terminal) 24. The base station may include a macro base station, a micro base station, a relay station or an access point in various forms. In systems using different radio access technologies, a device having a base station function may have different names. For example, in a Long Term Evolution (LTE) system, it is called as eNodeB or eNB, and in a 5G NR system, it is called as gNodeB or a gNB. Along with the evolution of the communication technology, the description about "base station" may change.

A core network includes several core network devices 26. The core network functions as to take charge of information exchange, routing, user data management and security in a system, as well as information exchange with the other communication system. Main network functions of the 5GC include an Access and Mobility management Function (AMF), a Session Management Function (SMF), a User Plane Function (UPF), a Network Repository Function (NRF), a Network Exposure Function (NEF), a Unified Data Management (UDM), a Location Management Function (LMF), and the other network functions.

For ease of description, the above-mentioned apparatuses for providing the wireless communication function for the UE 24 are collectively called as network device. For example, the network device includes at least one of the access network device 220 or the core network device 26.

The UE 24 includes various devices having the wireless communication function, e.g., a handheld device, a vehicle-mounted device, a wearable device, a computing device or any other processing device coupled to a wireless modem, and a user device, a Mobile Station (MS) or a terminal device in various forms. For ease of description, the above-mentioned devices are collectively called as UE. The access network device 220 communicates with the UE 24 via a certain air-interface technology, e.g., a Uu interface.

The technical solutions in the embodiments of the present invention may be applied to various communication systems, e.g., a Global System of Mobile Communication (GSM), a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, an Advanced Long Term Evolution (LTE-A) system, a New Radio (NR) system, an evolved NR system, a LTE-based access to Unlicensed spectrum (LTE-U) system, a NR-U system, a Universal Mobile Telecommunication System (UMTS), a Worldwide Interoperability for Microwave Access (WiMAX) communication system, a Wireless Local Area Networks (WLAN), Wireless Fidelity (WiFi), a next generation communication system, or any other communication system.

Generally, connections supported by a conventional communication system are limited and easy to be implemented. However, along with the development of the communication technology, a mobile communication system not only supports conventional communication but also supports Device to Device (D2D) communication, Machine to Machine (M2M) communication, Machine Type Communication (MTC), Vehicle to Vehicle (V2V) communication, and Vehicle to Everything (V2X) communication. The embodiments of the present invention may also be applied to these communication systems.

FIG. 3 is a flow chart of a method for determining a multicast service area for an inactive state according to an exemplary embodiment of the present invention. The method for determining the multicast service area for the inactive state is applied to the above-mentioned communication scenarios, and it is executed by a terminal. The method includes the following step.

**Step 301:** a service area of a multicast service for the inactive state is determined.

The multicast service for an inactive state refers to a multicast service supported by the terminal in an inactive state. The service area of the multicast service for the inactive state refers to an area where the multicast service for the inactive state is received by the terminal.

For example, the terminal determines the service area of the multicast service for the inactive state. In a case that the terminal is in the service area of the multicast service for the inactive state, the terminal receives a service configuration and service data of the multicast service for the inactive state. The service configuration of the multicast service for the inactive state refers to configuration information received by the terminal in the inactive state for receiving the multicast service, and the service data of the multicast service for the inactive state refers to a service content of the multicast service transmitted in the inactive state.

Optionally, the service area of the multicast service for the inactive state is determined based on at least one of: a first service area of the multicast service for the inactive state; a second service area of the multicast service for a connected state, i.e., the second service area of the multicast service configured for the terminal in a connected state; or a cell where the service configuration of the multicast service for the inactive state is received.

In some embodiments of the present invention, the terminal determines the first service area of the multicast service for the inactive state configured by a network as the service area of the multicast service for the inactive state.

In some embodiments of the present invention, the terminal is configured with the second service area of the multicast service for the connected state, and the terminal device determines the second service area as the service area of the multicast service for the inactive state. The multicast service for the connected state refers to a multicast service supported by the terminal in the connected state.

In some embodiments of the present invention, the terminal determines the cell where the service configuration of the multicast service for the inactive state is received as the service area of the multicast service for the inactive state.

In some embodiments of the present invention, the terminal determines an overlapping area between the first service area of the multicast service for the inactive state configured by the network and the second service area of the multicast service for the connected state as the service area of the multicast service for the inactive state.

In some embodiments of the present invention, the terminal determines an overlapping area between the first service area of the multicast service for the inactive state configured by the network and the cell where the service configuration of the multicast service for the inactive state is received as the service area of the multicast service for the inactive state. For example, in a case that the cell where the service configuration of the multicast service for the inactive state is received is included in the first service area of the multicast service for the inactive state configured by the network, the terminal determines the cell where the service configuration of the multicast service for the inactive state is received as the service area of the multicast service for the inactive state.

In some embodiments of the present invention, the terminal determines that an overlapping area between the second service area of the multicast service for the connected state configured by the network and the cell where the service configuration of the multicast service for the inactive state is received as the service area of the multicast service for the inactive state. For example, in a case that the cell where the service configuration of the multicast service for the inactive state is received is included in the second service area of the multicast service for the connected state configured by the network, the terminal determines the cell where the service configuration of the multicast service for the inactive state is received as the service area of the multicast service for the inactive state.

In some embodiments of the present invention, the terminal determines an overlapping area among the first service area of the multicast service for the inactive state configured by the network, the second service area of the multicast service for the connected state and the cell where the service configuration of the multicast service for the inactive state is received as the service area of the multicast service for the inactive state. For example, in a case that the cell where the service configuration of the multicast service for the inactive state is received is included in the second service area of the multicast service for the connected state configured by the network and the first service area of the multicast service for the inactive state, the terminal determines the cell where the service configuration of the multicast service for the inactive state is received as the service area of the multicast service for the inactive state.

The first service area of the multicast service for the inactive state is a reception area of the multicast service for the inactive state independently configured by a network device for the terminal, the second service area of the multicast service for the connected state is a reception area of the multicast service for the connected state configured by the network device for the terminal, and the multicast service for the connected state refers to the multicast service supported by the terminal in the connected state.

In some embodiments of the present invention, the terminal determines that the service area of the multicast service for the inactive state only includes a Primary cell (Pcell).

For example, the service area configured by the network only includes the Pcell, or the service area of the multicast service for the inactive state determined by the terminal based on the service area configured by the network only includes the Pcell.

The service area configured by the network includes at least one of: the first service area of the multicast service for the inactive state; the second service area of the multicast service for the connected state; or the cell where the service configuration of the multicast service for the inactive state is received.

Optionally, the service area of the multicast service for the inactive state may be a cell or a set of cells, or any other geographical area, which is represented through the following information: a cell identity list; a TAI list; or geographical area information.

The cell identity list includes an identity of an optional cell for the terminal, the TAI list includes an identity of a TAI where the terminal is registered, and the geographical area information refers to information about a geographical area where the terminal is located.

Optionally, the network device includes a RAN device and/or a CN device. For example, the network device includes a RAN device, or a CN device, or both.

Optionally, the service area of the multicast service for the inactive state is an area where the terminal is supported to receive the multicast service. The service area may be understood as information about terminal granularity, and the service areas of the multicast service for the inactive states for different terminals may be independent of each other, or identical to or different from each other, which will not be particularly defined herein.

In a word, in the method for determining the multicast service area for the inactive state provided in the embodiments of the present invention, the terminal determines the service area of the multicast service for the inactive state during the reception of the multicast service, so as to support the terminal in the RRC inactive state to receive the multicast service, thereby to support the reception continuity of the multicast service during the movement of the terminal.

In some embodiments of the present invention, the network device sends configuration information associated with the multicast service for the inactive state to the terminal. The terminal receives the configuration information associated with the multicast service for the inactive state, and determines the service area of the multicast service for the inactive state based on the configuration information associated with the multicast service for the inactive state.

The configuration information associated with the multicast service for the inactive state includes at least one of: the service configuration of the multicast service for the inactive state; the first service area of the multicast service for the inactive state; or the second service area of the multicast service for the connected state.

Optionally, the configuration information associated with the multicast service for the inactive state is carried in an RRC release message and sent to the terminal.

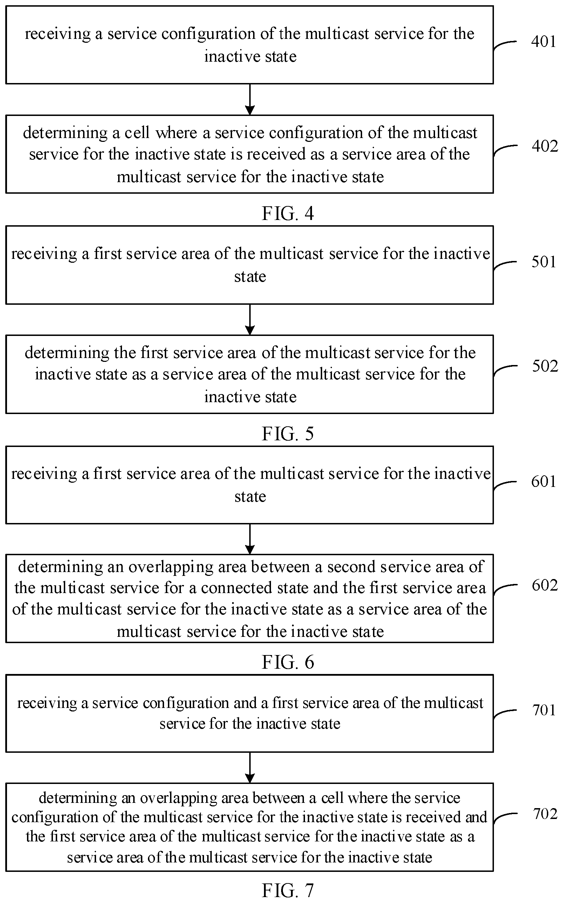

For example, as shown in FIG. 4, in a case that the configuration information includes the service configuration of the multicast service for the inactive state, the method for determining the multicast service area for the inactive state includes the following steps.

**Step 401:** the terminal receives the service configuration of the multicast service for the inactive state.

**Step 402:** the terminal determines the cell where the service configuration of the multicast service for the inactive state is received as the service area of the multicast service for the inactive state.

In some possible designs, in response to receiving the service configuration of the multicast service for the inactive state, the terminal determines the cell where the service configuration of the multicast service for the inactive state is received as the service area of the multicast service for the inactive state.

In some possible designs, in response to the configuration information only including the service configuration of the multicast service for the inactive state, the terminal determines the cell where the service configuration of the multicast service for the inactive state is received as the service area of the multicast service for the inactive state.

In some possible designs, the terminal determines that the service area of the multicast service for the inactive state only includes the Pcell. For example, the terminal determines the Pcell where the service configuration of the multicast service for the inactive state is received as the service area of the multicast service for the inactive state.

Optionally, in a case that the terminal is located in the service area of the multicast service for the inactive state, the terminal receives service data of the multicast service for the inactive state. Optionally, the terminal receives a multicast service for the inactive state session if and only if the terminal is located in the service area of the multicast service for the inactive state.

For example, as shown in FIG. 5, in a case that the configuration information includes the first service area of the multicast service for the inactive state, the method for determining the multicast service area for the inactive state includes the following steps.

**Step 501:** the terminal receives the first service area of the multicast service for the inactive state.

**Step 502:** the terminal determines the first service area of the multicast service for the inactive state as the service area of the multicast service for the inactive state.

In some possible designs, in response to receiving the first service area of the multicast service for the inactive state configured by the network, the terminal determines the first service area as the service area of the multicast service for the inactive state.

For example, in a case that the terminal has received the first service area configured by the network, no matter whether or not the service configuration of the multicast service for the inactive state is received, the terminal determines the first service area as the service area of the multicast service for the inactive state.

**In** some possible designs, in a case that the terminal has received the first service area configured by the network and has received the service configuration of the multicast service for the inactive state, the terminal determines the first service area as the service area of the multicast service for the inactive state. Alternatively, in a case that the terminal has received the first service area configured by the network and has not received the service configuration of the multicast service for the inactive state yet, the terminal determines the first service area as the service area of the multicast service for the inactive state.

In some possible designs, the service area of the multicast service for the inactive state is determined based on a service area configured independently by the network device, e.g., the service area configured independently by the network device is the first service area.

In some embodiments of the present invention, the terminal determines that the service area of the multicast service for the inactive state only includes the Pcell.

For example, the first service area configured by the network only includes the Pcell, or the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

For example, as shown in FIG. 6, in a case that the configuration information includes the first service area of the multicast service for the inactive state, the method for determining the multicast service area for the inactive state includes the following steps.

**Step 601:** the terminal receives the first service area of the multicast service for the inactive state.

**Step 602:** the terminal determines the overlapping area between the second service area of the multicast service for the connected state and the first service area of the multicast service for the inactive state as the service area of the multicast service for the inactive state.

In some possible designs, in response to the terminal in the connected state being configured with the second service area of the multicast service and receiving the first service area of the multicast service for the inactive state configured by the network, the terminal determines the overlapping area between the first service area and the second service area as the service area of the multicast service for the inactive state.

In some possible designs, the service area of the multicast service for the inactive state is determined based on the first service area and the second service area, or the service area of the multicast service for the inactive state is determined at least based on the first service area and the second service area, and a specific determination form will not be particularly defined herein. For example, the service area of the multicast service for the inactive state is a union set of the first service area and the second service area, or the service area of the multicast service for the inactive state is a difference set of the first service area and the second service area, or the service area of the multicast service for the inactive state is determined based on the first service area, the second service area and the other relevant area.

In some possible designs, the terminal determines that the service area of the multicast service for the inactive state only includes the Pcell. For example, the first service area configured by the network and/or the second service area configured by the network only include the Pcell. Alternatively, the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

For example, as shown in FIG. 7, in a case that the configuration information includes the service configuration and the first service area of the multicast service for the inactive state, the method for determining the multicast service for the inactive state includes the following steps.

**Step 701:** the terminal receives the service configuration and the first service area of the multicast service for the inactive state.

**Step 702:** the terminal determines the overlapping area between the cell where the service configuration of the multicast service for the inactive state is received and the first service area of the multicast service for the inactive state as the service area of the multicast service for the inactive state.

In some possible designs, in response to the terminal receiving the first service area of the multicast service for the inactive state configured by the network and the service configuration of the multicast service for the inactive state, the terminal determines the overlapping area between the first service area and the cell where the service configuration of the multicast service for the inactive state is received as the service area of the multicast service for the inactive state.

In some possible designs, the service area of the multicast service for the inactive state is determined based on the first service area and the cell where the service configuration of the multicast service for the inactive state is received, or the service area of the multicast service for the inactive state is determined at least based on the first service area and the cell where the service configuration of the multicast service for the inactive state is received, and a specific determination form will not be particularly defined herein. For example, the service area of the multicast service for the inactive state is a union set of the first service area and the cell where the service configuration of the multicast service for the inactive state is received, or the service area of the multicast service for the inactive state is a difference set of the first service area and the cell where the service configuration of the multicast service for the inactive state is received, or the service area of the multicast service for the inactive state is determined based on the first service area, the cell where the service configuration of the multicast service for the inactive state is received and the other relevant area.

In some possible designs, the terminal determines that the service area of the multicast service for the inactive state only includes the Pcell. For example, the first service area configured by the network only includes the Pcell, or the cell where the service configuration of the multicast service for the inactive state is received only includes the Pcell. Alternatively, the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

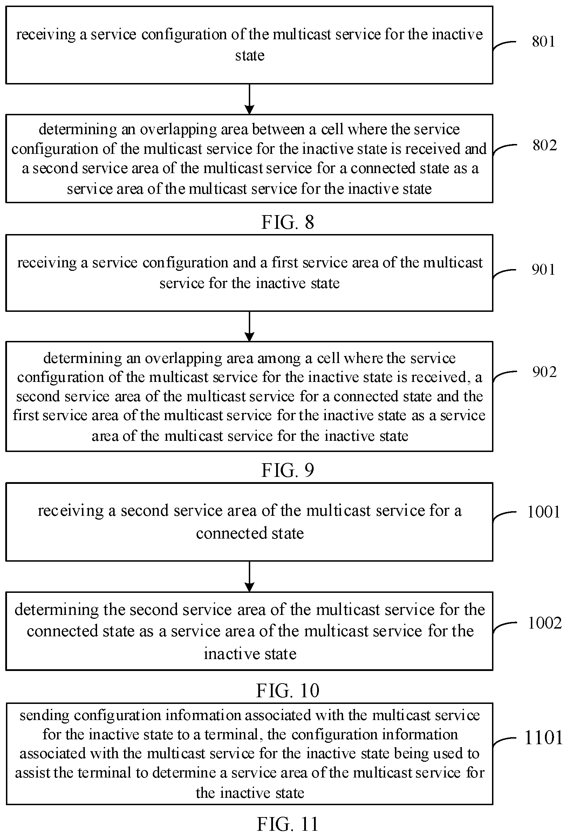

For example, as shown in FIG. 8, in a case that the configuration information includes the service configuration of the multicast service for the inactive state, the method for determining the multicast service area for the inactive state includes the following steps.

**Step 801:** the terminal receives the service configuration of the multicast service for the inactive state.

**Step 802:** the terminal determines the overlapping area between the cell where the service configuration of the multicast service for the inactive state is received and the second service area of the multicast service for the connected state as the service area of the multicast service for the inactive state.

**In** some possible designs, in response to the terminal in the connected state being configured with the second service area of the multicast service and receiving the service configuration of the multicast service for the inactive state, the terminal determines the overlapping area between the second service area and the cell where the service configuration of the multicast service for the inactive state is received.

In some possible designs, the service area of the multicast service for the inactive state is determined based on the second service area and the cell where the service configuration of the multicast service for the inactive state is received, or the service area of the multicast service for the inactive state is determined at least based on the second service area and the cell where the service configuration of the multicast service for the inactive state is received, and a specific determination form will not be particularly defined herein. For example, the service area of the multicast service for the inactive state is a union set of the second service area and the cell where the service configuration of the multicast service for the inactive state is received, or the service area of the multicast service for the inactive state is a difference set of the second service area and the cell where the service configuration of the multicast service for the inactive state is received, or the service area of the multicast service for the inactive state is determined based on the second service area, the cell where the service configuration of the multicast service for the inactive state is received and the other relevant area.

In some possible designs, the terminal determines that the service area of the multicast service for the inactive state only includes the Pcell. For example, the second service area configured by the network device only includes the Pcell and/or the cell where the service configuration of the multicast service for the inactive state is received only includes the Pcell. Alternatively, the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

For example, as shown in FIG. 9, in a case that the configuration information includes the service configuration of the multicast service for the inactive state and the first service area, the method for determining the multicast service area for the inactive state includes the following steps.

**Step 901:** the terminal receives the service configuration of the multicast service for the inactive state and the first service area.

**Step 902:** the terminal determines the overlapping area among the cell where the service configuration of the multicast service for the inactive state is received, the second service area of the multicast service for the connected state and the first service area of the multicast service for the inactive state as the service area of the multicast service for the inactive state.

In some possible designs, in response to the terminal in the connected state being configured with the second service area of the multicast service and receiving the service configuration and the first service area of the multicast service for the inactive state, the terminal determines the overlapping area among the first service area, the second service area and the cell where the service configuration of the multicast service for the inactive state is received as the service area of the multicast service for the inactive state.

In some possible designs, the service area of the multicast service for the inactive state is determined based on the first service area, the second service area and the cell where the service configuration of the multicast service for the inactive state is received, or the service area of the multicast service for the inactive state is determined at least based on the first service area, the second service area and the cell where the service configuration of the multicast service for the inactive state is received, and a specific determination form will not be particularly defined herein. For example, the service area of the multicast service for the inactive state is a union set of the first service area, the second service area and the cell where the service configuration of the multicast service for the inactive state is received, or the service area of the multicast service for the inactive state is a difference set of the first service area, the second service area and the cell where the service configuration of the multicast service for the inactive state is received, or the service area of the multicast service for the inactive state is determined based on the first service area, the second service area, the cell where the service configuration of the multicast service for the inactive state is received and the other relevant area.

In some possible designs, the terminal determines that the service area of the multicast service for the inactive state only includes the Pcell. For example, the first service area configured by the network only includes the Pcell, and/or the second service area configured by the network only includes the Pcell, and/or the cell where the service configuration of the multicast service for the inactive state is received only includes the Pcell. Alternatively, the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

For example, as shown in FIG. 10, in a case that the configuration information includes the second service area of the multicast service for the connected state, the method for determining the multicast service area for the inactive state includes the following steps.

**Step 1001:** the terminal receives the second service area of the multicast service for the connected state.

**Step 1002:** the terminal determines the second service area of the multicast service for the connected state as the service area of the multicast service for the inactive state.

For example, the terminal determines the second service area as the service area of the multicast service for the inactive state.

In some possible designs, the terminal determines that the service area of the multicast service for the inactive state only includes the Pcell. For example, the second service area configured by the network only includes the Pcell, or the service area of the multicast service for the inactive state determined by the terminal based on the service area configured by the network only includes the Pcell.

Optionally, in a case that the terminal is located in the service area of the multicast service for the inactive state, the terminal receives the service data of the multicast service for the inactive state. Optionally, the terminal receives the multicast service for the inactive state session if and only if the terminal is located in the service area of the multicast service for the inactive state.

In the method for determining the multicast service area for the inactive state provided in the above-mentioned exemplary embodiments of the present invention, the terminal determines the service area of the multicast service for the inactive state during the reception of the multicast service, so as to support the terminal to receive the multicast service in the RRC inactive state, thereby to support the reception continuity of the multicast service during the movement of the terminal.

FIG. 11 is a flow chart of a method for configuring a multicast service area for an inactive state provided in an exemplary embodiment of the present invention. The method for configuring the multicast service area for the inactive state is applied to the above-mentioned communication scenarios, and it is executed by a network device. The method includes the following step.

**Step 1101:** configuration information associated with a multicast service for the inactive state is sent to a terminal, and the configuration information associated with the multicast service for the inactive state is used to assist the terminal in determining a service area of the multicast service for the inactive state.

The multicast service for an inactive state refers to a multicast service supported by the terminal in an inactive state. The service area of the multicast service for the inactive state refers to an area where the multicast service for the inactive state is received by the terminal.

Optionally, the configuration information associated with the multicast service for the inactive state includes at least one of: a service configuration of the multicast service for the inactive state; a first service area of the multicast service for the inactive state; or a second service area of the multicast service for a connected state.

Optionally, the network device sends an RRC release message to the terminal, and the RRC release message carries the configuration information associated with the multicast service for the inactive state.

Optionally, the service area of the multicast service for the inactive state is determined based on at least one of: the first service area of the multicast service for the inactive state; the second service area of the multicast service for the connected state; or a cell where the service configuration of the multicast service for the inactive state is received.

In some embodiments of the present invention, the terminal determines the first service area of the multicast service for the inactive state configured by the network as the service area of the multicast service for the inactive state.

For example, in a case that the network device configures the first service area for the terminal, the terminal determines the first service area as the service area of the multicast service for the inactive state.

In some embodiments of the present invention, in a case that the terminal is configured with the second service area of the multicast service for the connected state, the terminal determines the second service area as the service area of the multicast service for the inactive state. The multicast service for the connected state refers to a multicast service supported by the terminal in a connected state.

For example, in a case that the network device configures the second service area for the terminal, the terminal determines the second service area as the service area of the multicast service for the inactive state.

In some embodiments of the present invention, the terminal determines the cell where the service configuration of the multicast service for the inactive state is received as the service area of the multicast service for the inactive state.

For example, in a case that the network device configures the service configuration of the multicast service for the inactive state for the terminal, the terminal determines the cell where the service configuration of the multicast service for the inactive state is received as the service area of the multicast service for the inactive state.

In some embodiments of the present invention, the terminal determines an overlapping area between the first service area of the multicast service for the inactive state configured by the network and the second service area of the multicast service for the connected state as the service area of the multicast service for the inactive state.

For example, in a case that the second service area configured by the network device for the terminal is included in the first service area of the multicast service for the inactive state configured by the network, the terminal determines the second service area as the service area of the multicast service for the inactive state.

**In** some embodiments of the present invention, the terminal determines an overlapping area between the first service area of the multicast service for the inactive state configured by the network and the cell where the service configuration of the multicast service for the inactive state is received as the service area of the multicast service for the inactive state. For example, in a case that the cell where the service configuration of the multicast service for the inactive state is sent by the network device is included in the first service area of the multicast service for the inactive state configured by the network, the terminal determines the cell where the service configuration of the multicast service for the inactive state is received as the service area of the multicast service for the inactive state.

**In** some embodiments of the present invention, the terminal determines an overlapping area between the second service area of the multicast service for the connected state configured by the network and the cell where the service configuration of the multicast service for the inactive state is received as the service area of the multicast service for the inactive state. For example, in a case that the cell where the service configuration of the multicast service for the inactive state is sent by the network device is included in the second service area of the multicast service for the connected state configured by the network, the terminal determines the cell where the service configuration of the multicast service for the inactive state is received as the service area of the multicast service for the inactive state.

**In** some embodiments of the present invention, the terminal determines an overlapping area among the first service area of the multicast service for the inactive state, the second service area of the multicast service for the connected state and the cell where the service configuration of the multicast service for the inactive state is received as the service area of the multicast service for the inactive state. For example, in a case that the cell where the service configuration of the multicast service for the inactive state is sent by the network device is included in the second service area of the multicast service for the connected state and the first service area of the multicast service for the inactive state configured by the network, the terminal determines the cell where the service configuration of the multicast service for the inactive state is received as the service area of the multicast service for the inactive state.

The first service area of the multicast service for the inactive state is a reception area of the multicast service for the inactive state independently configured by a network device for the terminal, the second service area of the multicast service for the connected state is a reception area of the multicast service for the connected state configured by the network device for the terminal, and the multicast service for the connected state refers to the multicast service supported by the terminal in the connected state.

**In** some embodiments of the present invention, the terminal determines that the service area of the multicast service for the inactive state only includes a Pcell.

For example, the service area configured by the network only includes the Pcell, or the service area of the multicast service for the inactive state determined by the terminal based on the service area configured by the network only includes the Pcell.

The service area configured by the network includes at least one of: the first service area of the multicast service for the inactive state; the second service area of the multicast service for the connected state; or the cell where the service configuration of the multicast service for the inactive state is received.

Optionally, the service area of the multicast service for the inactive state may be a cell or a set of cells, or any other geographical area, which is represented through the following information: a cell identity list; a TAI list; or geographical area information.

The cell identity list includes an identity of an optional cell for the terminal, the TAI list includes an identity of a TAI where the terminal is registered, and the geographical area information refers to information about a geographical area where the terminal is located.

Optionally, the network device includes a RAN device and/or a CN device. For example, the network device includes a RAN device, or a CN device, or both.

Optionally, the service area of the multicast service for the inactive state is an area where the terminal is supported to receive the multicast service. The service area may be understood as information about terminal granularity, and the service areas of the multicast service for the inactive states for different terminals may be independent of each other, or identical to or different from each other, which will not be particularly defined herein.

In a word, in the method for configuring the multicast service area for the inactive state provided in the embodiments of the present invention, in a case that the terminal is supported to receive the multicast service in the RRC inactive state, the network device sends the configuration information associated with the multicast service for the inactive state to the terminal, so as to support the terminal to determine the service area of the multicast service for the inactive state during the reception of the multicast service, and support the terminal to receive the multicast service in the RRC inactive state, thereby to support the reception continuity of the multicast service during the movement of the terminal.

For example, as shown in FIG. 11, the sending, by the network device, the configuration information to the terminal includes any of the following conditions: the network device sends the service configuration of the multicast service for the inactive state to the terminal; the network device configures the first service area of the multicast service for the inactive state for the terminal; or the network device configures the first service area of the multicast service for the inactive state for the terminal.

The network device sends the service configuration of the multicast service for the inactive state to the terminal.

The service configuration of the multicast service for the inactive state is used to indicate, or implicitly indicate or assist, the terminal to determine the cell where the service area of the multicast service for the inactive state is received as the service area of the multicast service for the inactive state; or the service configuration of the multicast service for the inactive state is used to indicate, or implicitly indicate or assist, the terminal to determine the overlapping area between the cell where the service configuration of the multicast service for the inactive state is received and the second service area of the multicast service for the connected state as the service area of the multicast service for the inactive state; or the service configuration of the multicast service for the inactive state is used to indicate, or implicitly indicate or assist, the terminal to determine the second service area of the multicast service for the connected state as the service area of the multicast service for the inactive state.

The network device configures the first service area of the multicast service for the inactive state for the terminal.

The first service area of the multicast service for the inactive state is used to indicate, or implicitly indicate or assist, the terminal to determine the first service area of the multicast service for the inactive state as the service area of the multicast service for the inactive state; or the first service area of the multicast service for the inactive state is used to indicate, or implicitly indicate or assist, the terminal to determine the overlapping area between the first service area of the multicast service for the inactive state and the second service area of the multicast service for the connected state as the service area of the multicast service for the inactive state.

The network device sends the service configuration and the first service area of the multicast service for the inactive state to the terminal.

The service configuration and the first service area of the multicast service for the inactive state is used to indicate, or implicitly indicate or assist, the terminal to determine the overlapping area between the cell where the service configuration of the multicast service for the inactive state is received and the first service area of the multicast service for the inactive state as the service area of the multicast service for the inactive state; or the service configuration and the first service area of the multicast service for the inactive state is used to indicate, or implicitly indicate or assist, the terminal to determine the overlapping area among the cell where the service configuration of the multicast service for the inactive state is received, the first service area of the multicast service for the inactive state and the second service area of the multicast service for the connected state as the service area of the multicast service for the inactive state; or the first service area of the multicast service for the inactive state is used to indicate, or implicitly indicate or assist, the terminal to determine the first service region of the multicast service for the inactive state as the service area of the multicast service for the inactive state; or the first service area of the multicast service for the inactive state is used to indicate, or implicitly indicate or assist, the terminal to determine the overlapping area between the first service area of the multicast service for the inactive state and the second service area of the multicast service for the connected state as the service area of the multicast service for the inactive state.

In some embodiments of the present invention, the sending, by the network device, the configuration information to the terminal further includes configuring the second service area of the multicast service for the connected state for the terminal. The second service area is configured by the network device for the terminal in a case that the terminal is in an RRC connected state, or configured by the network device for the terminal in a case that the terminal is in an RRC inactive state.

In a word, in the method for configuring the multicast service area for the inactive state provided in the embodiments of the present invention, in a case that the terminal supports the reception of the multicast service in the RRC inactive state, the network device sends the configuration information associated with the multicast service for the inactive state to the terminal, so as to support the terminal to determine the service area of the multicast service for the inactive state during the reception of the multicast service, and support the terminal to receive the multicast service in the RRC inactive state, thereby to support the reception continuity of the multicast service during the movement of the terminal.

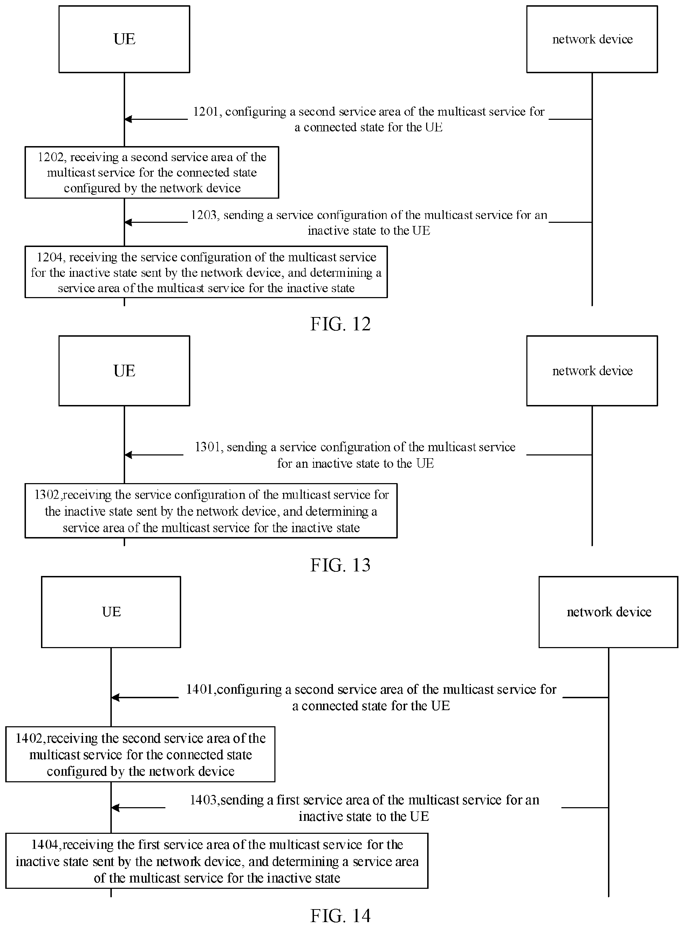

For example, FIG. 12 is a flow chart of the method for configuring the multicast service area for the inactive state according to an exemplary embodiment of the present invention, and this method is applied to the above-mentioned communication scenarios. The method includes the following steps.

**Step 1201:** the network device configures the second service area of the multicast service for the connected state for the terminal.

**Step 1202:** the terminal receives the second service area of the multicast service for the connected state configured by the network device.

**Step 1203:** the network device sends the service configuration of the multicast service for the inactive state to the terminal.

For example, a mode of issuing the service configuration of the multicast service for the inactive state includes, but not limited to, carrying the service configuration of the multicast service for the inactive state in an RRC release message.

**Step 1204:** the terminal receives the service configuration of the multicast service for the inactive state sent by the network device, and determines the service area of the multicast service for the inactive state.

Optionally, the terminal receives the service configuration of the multicast service for the inactive state, and determines the second service area as the service area of the multicast service for the inactive state.

Optionally, in response to merely receiving the service configuration of the multicast service for the inactive state, the terminal determines the second service area as the service area of the multicast service for the inactive state.

Optionally, the terminal determines that the service area of the multicast service for the inactive state only includes a Pcell. For example, the service area of the multicast service for the inactive state includes, but not limited to, any one of: a cell identity list; a TAI list; or geographical area information.

The terminal receives the multicast service for the inactive state if and only if the terminal is located in the service area of the multicast service for the inactive state.

In a word, in the method for configuring the multicast service area for the inactive state provided in the embodiments of the present invention, in a case that the terminal supports the reception of the multicast service in the RRC inactive state, the network device sends the service configuration of the multicast service for the inactive state to the terminal, so as to support the terminal to determine the service area of the multicast service for the inactive state during the reception of the multicast service, and support the terminal to receive the multicast service in the RRC inactive state, thereby to support the reception continuity of the multicast service during the movement of the terminal.

For example, FIG. 13 is another flow chart of the method for configuring the multicast service area for the inactive state according to an exemplary embodiment of the present invention, and this method is applied to the above-mentioned communication scenarios. The method includes the following steps.

**Step 1301:** the network device sends the service configuration of the multicast service for the inactive state to the terminal.

For example, a mode of issuing the service configuration of the multicast service for the inactive state includes, but not limited to, carrying the service configuration of the multicast service for the inactive state in an RRC release message.

**Step 1302:** the terminal receives the service configuration of the multicast service for the inactive state sent by the network device, and determines the service area of the multicast service for the inactive state.

Optionally, the terminal receives the service configuration of the multicast service for the inactive state and determines the cell where the service configuration of the multicast service for the inactive state is received as the service area of the multicast service for the inactive state.

Optionally, the terminal determines that the service area of the multicast service for the inactive state only includes a Pcell. For example, the service area of the multicast service for the inactive state includes, but not limited to, any one of: a cell identity list; a TAI list; or geographical area information.

The terminal receives the multicast service for the inactive state if and only if the terminal is located in the service area of the multicast service for the inactive state.

In a word, in the method for configuring the multicast service area for the inactive state provided in the embodiments of the present invention, in a case that the terminal supports the reception of the multicast service in the RRC inactive state, the network device sends the service configuration of the multicast service for the inactive state to the terminal, so as to support the terminal to determine the service area of the multicast service for the inactive state during the reception of the multicast service, and support the terminal to receive the multicast service in the RRC inactive state, thereby to support the reception continuity of the multicast service during the movement of the terminal.

For example, FIG. 14 is yet another flow chart of the method for configuring the multicast service area for the inactive state according to an exemplary embodiment of the present invention, and this method is applied to the above-mentioned communication scenarios. The method includes the following steps.

**Step 1401:** the network device configures the second service area of the multicast service for the connected state for the terminal.

**Step 1402:** the terminal receives the second service area of the multicast service for the connected state configured by the network device.

**Step 1403:** the network device configures the first service area of the multicast service for the inactive state for the terminal.

Optionally, the first service area is area information configured by the network device via an independent signaling.

For example, a mode of issuing the first service area of the multicast service for the inactive state includes, but not limited to, carrying the first service area of the multicast service for the inactive state in an RRC release message. In other words, the area information configured via the independent signaling is, but not limited to, carried in the RRC release message.

**Step 1404:** the terminal receives the first service area of the multicast service for the inactive state sent by the network device, and determines the service area of the multicast service for the inactive state.

Optionally, the terminal determines the first service area as the service area of the multicast service for the inactive state.

Optionally, the terminal determines the overlapping area between the first service area and the second service area as the service area of the multicast service for the inactive state, i.e., the terminal determines an area part of the first service area belonging to the second service area as the service area of the multicast service for the inactive state.

Optionally, the terminal determines that the service area of the multicast service for the inactive state merely includes a Pcell. For example, the service area of the multicast service for the inactive state includes, but not limited to, any one of: a cell identity list; a TAI list; or geographical area information.

The terminal receives the multicast service for the inactive state if and only if the terminal is located in the service area of the multicast service for the inactive state.

In a word, in the method for configuring the multicast service area for the inactive state provided in the embodiments of the present invention, in a case that the terminal supports the reception of the multicast service in the RRC inactive state, the network device sends the first service area of the multicast service for the inactive state to the terminal, so as to support the terminal to determine the service area of the multicast service for the inactive state during the reception of the multicast service, and support the terminal to receive the multicast service in the RRC inactive state, thereby to support the reception continuity of the multicast service during the movement of the terminal.

It should be appreciated that, the above embodiments may be divided and combined freely based on the understanding of the person skilled in the art to form different embodiments, which will not be particularly defined herein.

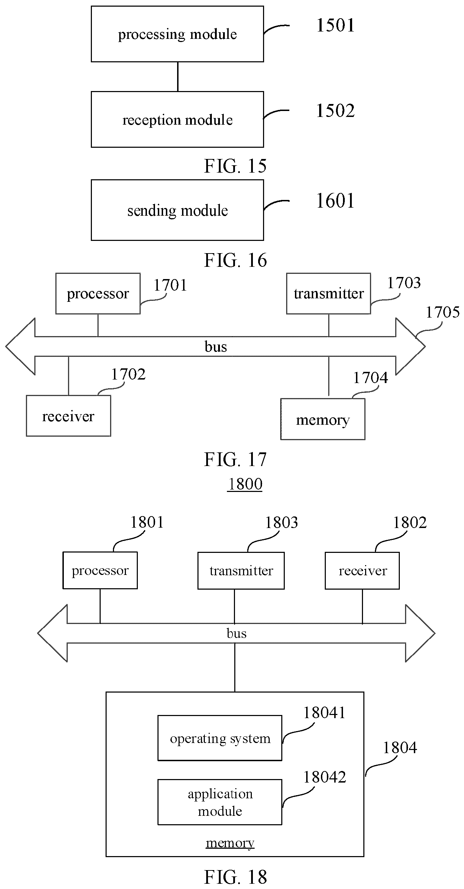

FIG. 15 is a block diagram of an apparatus for determining a multicast service area for an inactive state according to an exemplary embodiment of the present invention, and this apparatus may be implemented as a part of, or all of, a terminal through software, hardware or both. The apparatus includes a processing module 1501.

The processing module 1501 is configured to determine a service area of a multicast service for the inactive state.

In some embodiments of the present invention, the service area of the multicast service for the inactive state is determined based on at least one of: a first service area of the multicast service for the inactive state; a second service area of the multicast service for a connected state; or a cell where a service configuration of the multicast service for the inactive state is received.

In some embodiments of the present invention, the apparatus further includes a reception module 1502. The reception module 1502 is configured to receive configuration information associated with the multicast service for the inactive state. The processing module 1501 is configured to determine the service area of the multicast service for the inactive state based on the configuration information associated with the multicast service for the inactive state.

In some embodiments of the present invention, the configuration information associated with the multicast service for the inactive state includes at least one of: the service configuration of the multicast service for the inactive state; the first service area of the multicast service for the inactive state; or the second service area of the multicast service for the connected state.

In some embodiments of the present invention, the processing module 1501 is configured to determine the cell where the service area of the multicast service for the inactive state is received as the service area of the multicast service for the inactive state.

In some embodiments of the present invention, the processing module 1501 is configured to determine the first service area of the multicast service for the inactive state configured by the network as the service area of the multicast service for the inactive state.

In some embodiments of the present invention, the processing module 1501 is configured to, in a case that the terminal is configured with the second service area of the multicast service for the connected state, determine the second service area as the service area of the multicast service for the inactive state.

In some embodiments of the present invention, the processing module 1501 is configured to determine an overlapping area between the second service area of the multicast service for the connected state and the first service area of the multicast service for the inactive state configured by the network as the service area of the multicast service for the inactive state.

In some embodiments of the present invention, the processing module 1501 is configured to determine that the service area of the multicast service for the inactive state only includes a Pcell.

In some embodiments of the present invention, the service area of the multicast service for the inactive state includes at least one of: a cell identity list; a TAI list; or geographical area information.

FIG. 16 is a block diagram of an apparatus for configuring a multicast service area for an inactive state according to an exemplary embodiment of the present invention, and this apparatus may be implemented as a part of, or all of, a network device through software, hardware or both. The apparatus includes a transmission module 1601.

The transmission module 1601 is configured to send configuration information associated with a multicast service for the inactive state to a terminal. The configuration information associated with the multicast service for the inactive state is used to assist the terminal in determining a service area of the multicast service for the inactive state.

In some embodiments of the present invention, the configuration information associated with the multicast service for the inactive state includes at least one of: a service configuration of the multicast service for the inactive state; a first service area of the multicast service for the inactive state; or a second service area of the multicast service for a connected state.

In some embodiments of the present invention, the service area of the multicast service for the inactive state is determined based on at least one of: the first service area of the multicast service for the inactive state; the second service area of the multicast service for the connected state; or a cell where the service configuration of the multicast service for the inactive state is received.

In some embodiments of the present invention, the service area of the multicast service for the inactive state includes at least one of: a cell identity list; a TAI list; or geographical area information.

FIG. 17 is a schematic view showing a UE according to an exemplar embodiment of the present invention. The UE includes a processor 1701, a receiver 1702, a transmitter 1703, a memory 1704 and a bus 1705.

The processor 1701 includes one or more processing cores, and the processor 1701 executes various function applications and information processing through running a software program and a module.

The receiver 1702 and the transmitter 1703 may be implemented as a communication assembly, and the communication assembly may be a communication chip.

The memory 1704 is coupled to the processor 1701 via the bus 1705.

The memory 1704 stores therein at least one instruction, and the processor 1701 is used to execute the at least one instruction to implement the steps in the above method embodiments.

In addition, the memory 1704 is implemented through any types of volatile or nonvolatile storage devices or a combination thereof. The volatile or nonvolatile storage device includes, but not limited to, a magnetic disk or an optical disk, an Electrically Erasable Programmable Read Only Memory (EEPROM), an Erasable Programmable Read Only Memory (EPROM), a Static Random-Access Memory (SRAM), a Read Only Memory (ROM), a magnetic memory, a flash memory, or a Programmable Read Only Memory (PROM).

The present invention further provides an exemplary embodiment a non-temporary computer-readable storage medium including an instruction, e.g., a memory including an instruction. The instruction is executed by a processor a UE to implement the above-mentioned method for determining the multicast service area for the inactive state. For example, the non-temporary computer-readable storage medium may be a ROM, a Random Access Memory (RAM), a Compact Disc-Read Only Memory (CD-ROM), a magnetic tape, a floppy disk, an optical data storage device, etc.

A non-temporary computer-readable storage medium is provided. An instruction in the non-temporary computer-readable storage medium is executed by a processor of a UE, so that the UE executes the above-mentioned method for determining the multicast service area for the inactive state.

FIG. 18 is a block diagram of the network device 1800 according to an exemplary embodiment of the present invention. The network device 1800 may be a RAN device (e.g., a base station) and/or a CN device.

The network device 1800 includes a processor 1801, a receiver 1802, a transmitter 1803, and a memory 1804. The receiver 1802, the transmitter 1803 and the memory 1804 are coupled to the processor 1801 via a bus.

The processor 1801 includes one or more processing cores. The processor 1801 executes the above-mentioned method for configuring the multicast service area for the inactive state through running a software program and a module. The memory 1804 is used to store the software program and the module. To be specific, the memory 1804 stores therein an operating system 18041, and an application module 18042 desired for at least one function. The receiver 1802 is used to receive communication data sent by the other device, and the transmitter 1803 is used to send communication data to the other device.

The present invention further provides in an exemplary embodiment a computer-readable storage medium storing therein at least one instruction, at least one program, a code set or an instruction set. The at least one instruction, the at least one program, the code set or the instruction set is loaded and executed by a processor to implement the above-mentioned method for determining the multicast service area for the inactive state or the above-mentioned method for configuring the multicast service area for the inactive state provided in the method embodiments.

The present invention further provides in an exemplary embodiment a computer program product including a computer instruction. The computer instruction is stored in a computer-readable storage medium. A processor of a computer device reads the computer instruction from the computer-readable storage medium and executes the computer instruction to implement the above-mentioned method for determining the multicast service area for the inactive state or the above-mentioned method for configuring the multicast service area for the inactive state provided in the method embodiments.

The present invention further provides in an exemplary embodiment a chip including a programmable logic circuit and/or a program instruction. The chip operates to implement the above-mentioned method for determining the multicast service area for the inactive state or the above-mentioned method for configuring the multicast service area for the inactive state provided in the method embodiments.

It should be appreciated that, the expression "a plurality of" in the embodiments of the present invention refers to two or more. The expression "and/or" is used to describe a relationship between associated objects, and there may exist three relationships. For example, "A and/or B" represents that, there is only A, there are both A and B, and there is only B. The symbol "/" usually refers to "or".

It should be further appreciated that, such expressions as "first" and "second" are used to describe various information, but the information is not limited by these expressions. These expressions are merely used to differentiate the information of a same type from each other rather than to represent any specific order or importance level. Actually, the expressions "first" and "second" may be replaced with each other. For example, without departing from the scope of the present invention, a first information frame may also be called as a second information frame, and similarly a second information frame may also be called as a first information frame.

It should be appreciated that, although the operations are described in a specific order in the drawings, it shall not be construed as that these operations are required to be performed in the shown specific order or in a serial order, or all the operations are required to be performed.

Other embodiments of the present invention will be apparent to those skilled in the art from consideration of the specification and practice of the present invention disclosed here. This application is intended to cover any variations, uses, or adaptations of the invention following the general principles thereof and including such departures from the invention as come within known or customary practice in the art. It is intended that the specification and examples be considered as exemplary only, with a true scope and spirit of the invention being indicated by the appended claims.

It should be appreciated that, the present invention is not limited to the exact construction that has been described hereinabove and illustrated in the accompanying drawings, and that various modifications and changes can be made without departing from the scope thereof. It is intended that the scope of the present invention only be limited by the appended claims.

## Claims

1. A method for determining a multicast service area for an inactive state, executed by a terminal, comprising:
determining a service area of a multicast service for the inactive state.

2. The method of claim 1, wherein the service area of the multicast service for the inactive state is determined based on at least one of:
a first service area of the multicast service for the inactive state;
a second service area of the multicast service for a connected state; or
a cell where a service configuration of the multicast service for the inactive state is received.

3. The method of claim 1, wherein the determining the service area of the multicast service for the inactive state comprises:
receiving configuration information associated with the multicast service for the inactive state; and
determining the service area of the multicast service for the inactive state based on the configuration information associated with the multicast service for the inactive state.

4. The method of claim 3, wherein the configuration information associated with the multicast service for the inactive state comprises at least one of:
a service configuration of the multicast service for the inactive state;
a first service area of the multicast service for the inactive state; or
a second service area of the multicast service for a connected state.

5. The method of claim 1, wherein the determining the service area of the multicast service for the inactive state comprises:
determining a cell where a service configuration of the multicast service for the inactive state is received as the service area of the multicast service for the inactive state.

6. The method of claim 1, wherein the determining the service area of the multicast service for the inactive state comprises:
determining a first service area of the multicast service for the inactive state configured by a network as the service area of the multicast service for the inactive state.

7. The method of claim 1, wherein the determining the service area of the multicast service for the inactive state comprises:
in a case that the terminal is configured with a second service area of the multicast service for a connected state, determining the second service area as the service area of the multicast service for the inactive state.

8. The method of claim 1, wherein the determining the service area of the multicast service for the inactive state comprises:
determining an overlapping area between a second service area of the multicast service for a connected state and a first service area of the multicast service for the inactive state configured by a network as the service area of the multicast service for the inactive state.

9. The method of claim 1, wherein the determining the service area of the multicast service for the inactive state comprises:
determining that the service area of the multicast service for the inactive state only comprises a Primary cell (Pcell).

10. The method of any one of claims 1 to 9, wherein the service area of the multicast service for the inactive state comprises at least one of:
a cell identity list;
a Tracking Area Identity (TAI) list; or
geographical area information.

11. A method for configuring a multicast service area for an inactive state, executed by a network device, comprising:
sending configuration information associated with a multicast service for the inactive state to a terminal, wherein the configuration information associated with the multicast service for the inactive state is used to assist the terminal in determining a service area of the multicast service for the inactive state.

12. The method of claim 11, wherein the configuration information associated with the multicast service for the inactive state comprises at least one of:
a service configuration of the multicast service for the inactive state;
a first service area of the multicast service for the inactive state; or
a second service area of the multicast service for a connected state.

13. The method of claim 11, wherein the service area of the multicast service for the inactive state is determined based on at least one of:
a first service area of the multicast service for the inactive state;
a second service area of a multicast service for a connected state; or
a cell where a service configuration of the multicast service for the inactive state is received.

14. The method of any one of claims 11 to 13, wherein the service area of the multicast service for the inactive state comprises at least one of:
a cell identity list;
a TAI list; or
geographical area information.

15. An apparatus for determining a multicast service area for an inactive state, comprising:
a processing module configured to determine a service area of a multicast service for the inactive state.

16. An apparatus for configuring a multicast service area for an inactive state, comprising:
a sending module configured to send configuration information associated with a multicast service for the inactive state to a terminal, wherein the configuration information associated with the multicast service for the inactive state is used to assist the terminal in determining a service area of the multicast service for the inactive state.

17. A terminal, comprising:
a processor; and
a transceiver coupled to the processor,
wherein the processor is configured to load and execute an executable instruction to implement the method of any one of claims 1 to 10.

18. A network device, comprising:
a processor; and
a transceiver coupled to the processor,
wherein the processor is configured to load and execute an executable instruction to implement the method of any one of claims 11 to 14.

19. A computer-readable storage medium storing therein at least one instruction, at least one program, a code set or an instruction set, wherein the at least one instruction, the at least one program, the code set or the instruction set is loaded and executed by a processor to implement the method of any one of claims 1 to 10 or the method of any one of claims 11 to 14.

20. A computer program product, comprising a computer instruction, wherein the computer instruction is stored in a computer-readable storage medium, and a processor of a computer equipment reads the computer instruction from the computer-readable storage medium and executes the computer instruction to implement the method of any one of claims 1 to 10 or the method of any one of claims 11 to 14.
